# EUROPEAN PATENT APPLICATION

(11) **EP 4 765 240 A1**
(43) Date of publication of application: **24.06.2026**
(21) Application number: 24908183.7
(22) Date of filing: 20.12.2024
(51) Int. Cl.: H01M 4/36, H01M 4/525, H01M 4/505, H01M 4/131, H01M 10/052, H01M 4/02

(54) **POSITIVE ELECTRODE MATERIAL, AND POSITIVE ELECTRODE AND LITHIUM SECONDARY BATTERY COMPRISING SAME**

(30) Priority: 22.12.2023 KR 20230189917; 20.11.2024 KR 20240166754
(71) Applicant: LG Energy Solution, Ltd., Seoul 07335 (KR)
(72) Inventor: OH, Su Yeon, Daejeon 34122 (KR); LEE, Seok Jin, Daejeon 34122 (KR); LHO, Eun Sol, Daejeon 34122 (KR); HWANG, Jin Tae, Daejeon 34122 (KR); KIM, Hyeong Il, Daejeon 34122 (KR)
(74) Representative: Hoffmann Eitle
(86) International application number: PCT/KR2024/020858
(87) International publication number: WO 2025/135901

(57) **Abstract**

A positive electrode material includes a positive electrode active material that includes: lithium nickel-based oxide particles in the form of secondary particles as agglomerates of primary particles, in which among all metals excluding lithium, the content of Ni is 50 mol% to 90 mol%; and a boron (B)-containing coating layer formed on the surface of the lithium nickel-based oxide particles. The BET specific surface area of the positive electrode material is 0.41 m²/g to 0.59 m²/g, and the average crystallite size of the positive electrode material is 155 nm or more

## Description

### TECHNICAL FIELD

### Cross-reference to Related Applications

This application is based on and claims priority from Korean Patent Application No. 10-2023-0189917, filed on December 22, 2023 and 10-2024-0166754, filed on November 20, 2024 with the Korean Intellectual Property Office, the disclosure of which is incorporated by reference herein.

### Technical Field

The present disclosure relates to a positive electrode material, and a positive electrode and a lithium secondary battery including the same.

### BACKGROUND ART

A lithium secondary battery generally comprises a positive electrode, a negative electrode, a separator, and an electrolyte. The positive and negative electrodes include active materials capable of lithium ion intercalation and deintercalation.

As active materials for the positive electrode of lithium secondary batteries, lithium cobalt oxide (LiCoO₂), lithium nickel oxide (LiNiO₂), lithium manganese oxides (such as LiMnO₂ or LiMn₂O₄), and lithium iron phosphate compounds (LiFePO₄) have been used. Among these, lithium cobalt oxide offers advantages such as high operating voltage and excellent capacity characteristics, however, it is difficult to apply commercially to large-capacity batteries due to the high cost and unstable supply of cobalt as a raw material. Lithium nickel oxide suffers from poor structural stability, making it difficult to achieve sufficient cycle life characteristics. Meanwhile, lithium manganese oxide exhibits excellent stability but has the drawback of low capacity characteristics. To overcome the problems associated with lithium transition metal oxides containing Ni, Co, or Mn alone, lithium composite transition metal oxides containing two or more transition metals have been developed. Among them, lithium nickel cobalt manganese oxide, which includes Ni, Co, and Mn, is widely used in the field of electric vehicle batteries.

However, in the case of conventional positive electrode materials using lithium nickel cobalt manganese oxide, although their high specific surface area contributes to good resistance characteristics, the particles are easily fractured during electrode manufacturing, generating a large amount of fine particles. This leads to numerous side reactions with the electrolyte, resulting in significant gas generation during high-temperature storage. To overcome this, approaches to reduce the specific surface area have been proposed. However, if the specific surface area becomes too low, the initial resistance increases, leading to deterioration in output characteristics and initial capacity.

Accordingly, there is a need to develop a positive electrode material that not only has low resistance and excellent output characteristics but also provides outstanding high-temperature storage performance.

### DISCLOSURE OF THE INVENTION

### TECHNICAL PROBLEM

The present invention has been made to solve the above problems, and provides a positive electrode material having low resistance and excellent output characteristics, as well as superior high-temperature storage performance, and a positive electrode and a lithium secondary battery including the same.
[1] The present disclosure provides a positive electrode material including: a positive electrode active material that includes: lithium nickel-based oxide particles in the form of secondary particles as agglomerates of primary particles, in which among all metals excluding lithium, the content of Ni is 50 mol% to 90 mol%; and a boron (B)-containing coating layer formed on the surface of the lithium nickel-based oxide particles. A BET specific surface area of the positive electrode material is 0.41 m²/g to 0.59 m²/g, and an average crystallite size of the positive electrode material is 155 nm or more.
[2] The present invention provides the positive electrode material of [1] above, the average crystallite size of the positive electrode material may be 155 nm to 170 nm.
[3] The present invention provides the positive electrode material of [1] or [2] above, the lithium nickel-based oxide particles may be represented by the following formula 1.

   [Formula 1] Liₐ[Ni_{b}Co_{c}M¹_{d}M²ₑ]O₂

   In the above formula 1, M¹ is Mn, Al, or a combination thereof, M² at least one selected from the group consisting of Ti, Mg, Al, Zr, Y, Ba, Ca, Sr, W, Ta, Nb, and Mo, and 0.80≤a≤1.20, 0.50≤b≤0.90, 0<c≤0.40, 0<d≤0.40, and 0≤e≤0.10 are satisfied.
[4] The present invention provides the positive electrode material of any one of [1] to [3] above, the boron (B) may be included in an amount of 500 ppm to 1000 ppm with respect to the total weight of the positive electrode material.
[5] The present invention provides the positive electrode material of any one of [1] to [4] above, a residual lithium amount in the positive electrode material may be 0.2 wt% to 0.4 wt%.
[6] The present invention provides the positive electrode material of any one of [1] to [5] above, the cation mixing ratio of the positive electrode material may be 2.5 at% or less.
[7] The present invention provides the positive electrode material of any one of [1] to [6] above, the positive electrode material may include large particles having an average particle size D₅₀ of 6 µm to 20 µm, and small particles having an average particle size D₅₀ of 0.1 µm to 5.5 µm.
[8] The present invention provides the positive electrode material of any one of [1] to [7] above, the positive electrode material may include large particles having an average particle size D₅₀ of 6 µm to 20 µm, small particles having an average particle size D₅₀ of 0.1 µm to 5.5 µm, and the large particles and the small particles may be included at a weight ratio of 60 : 40 to 80 : 20.
[9] The present disclosure provides a positive electrode including the positive electrode material according to at least one of [1] to [8].
[10] The present disclosure provides a lithium secondary battery including the positive electrode according to [9] .

### ADVANTAGEOUS EFFECTS

The positive electrode material according to the present disclosure is characterized by a BET specific surface area of 0.41 m²/g to 0.59 m²/g, and an average crystallite size of 155 nm or more. In the case of a lithium secondary battery to which a positive electrode material satisfying all of the above conditions is applied, initial resistance characteristics and high-temperature storage characteristics are superior to those in a lithium secondary battery to which a conventional positive electrode material is applied.

### MODE FOR CARRYING OUT THE INVENTION

Hereinafter, the present invention will be described in more detail.

Terms or words used in the present specification and claims should not be limitedly construed as usual or dictionary meanings, and should be interpreted as meanings and concepts consistent with the technical idea of the present disclosure on the basis of the principle that the inventor can appropriately define the concept of the term in order to explain his/her own invention in the best way.

In the present disclosure, the "specific surface area" is measured by a BET method, and can be calculated from a nitrogen gas adsorption amount by using, preferably, BELSORP-mini II of BEL Japan under a liquid nitrogen temperature (77K).

In the present disclosure, the "single particle type" refers to a particle composed of 50 or less nodules. This concept includes a single particle composed of one nodule and a pseudo-single particle that is a composite of 2 to 50 nodules.

The above "nodule" is a subordinate particle unit constituting a single particle or a pseudo-single particle, and may be a single crystal having no crystalline grain boundary, or may be a polycrystal having no grain boundary in appearance when observed using a scanning electron microscope in a field of view of 5,000 to 20,000 times.

In the present disclosure, the "secondary particle" means a particle formed by agglomeration of a plurality of (*e*.*g*., tens to hundreds) primary particles. Preferably, the secondary particle may be an agglomerate of 51 or more primary particles.

In the present disclosure, the "particle" is a concept that includes any one or all of a single particle, a pseudo-single particle, a primary particle, a nodule, and a secondary particle.

In the present disclosure, the "average particle size D₅₀" means a particle size based on 50% of the volume cumulative particle size distribution of positive electrode active material powder or positive electrode material powder, and may be measured by using a laser diffraction method. For example, for the measurement, positive electrode active material powder or positive electrode material powder is dispersed in a dispersion medium, and then is introduced into a commercially available laser diffraction particle size measurement device (*e.g.,* Microtrac MT 3000) and is irradiated with ultrasonic waves of about 28 kHz with an output of 60 W. Then, after a volume cumulative particle size distribution graph is obtained, the particle size corresponding to 50% in the volume cumulative amount is obtained.

In the present disclosure, the "crystallite" means a particle unit having substantially the same crystal orientation, and may be confirmed through the electron backscatter diffraction (EBSD) analysis. Preferably, this is a minimum particle unit displayed in the same color on an IPF map obtained by performing the EBSD analysis on the cross section of the positive electrode active material cut by ion milling.

In the present disclosure, the "average crystallite size" may be quantitatively analyzed using an X-ray diffraction analysis (XRD) by Cu Kα X-rays. preferably, in order to quantitatively analyze the average crystal size of crystal grains, particles to be measured may be put into a holder and irradiated with X-rays, and then the obtained diffraction grating may be analyzed. Sampling was prepared by placing a powder sample of measurement target particles in a recessed groove at the center of a general powder holder, leveling the surface by using a slide glass, and making the sample height equal to the edge of the holder. Then, by using Bruker D8 Endeavor (light source: Cu Kα, λ=1.54 Å) equipped with a position sensitive detector LynxEye XE-T, an X-ray diffraction analysis was performed using an FDS of 0.5° and a 2θ range of 10° to 125°, under the conditions of a step size of 0.02°, and a total scan time of about 60 min. For the measured data, Rietveld refinement was performed in consideration of charges (metal ions at the transition metal site are +3, and Ni ions at the Li site are +2) at each site and cation mixing. The crystal grain size was analyzed in consideration of instrumental broadening by using the fundamental parameter approach (FPA) implemented in the Bruker TOPAS program, and all peaks in the measurement range were used for fitting. The peak shape was fitted using only the Lorentzian contribution as the first principle (FP) among peak types available in TOPAS, and here, no strain was considered.

In the present disclosure, the "cation mixing ratio" means the occupying percentage (%) of nickel ions (Ni²⁺) mixed with a lithium layer of lithium nickel-based oxide having a layered structure, with respect to the total amount of lithium sites (Li sites), and refers to a value measured through an X-ray diffraction analysis method (XRD). Preferably, the X-ray diffraction analysis method may be performed as follows. By using Bruker D8 Endeavor (light source: Cu Kα, A=1.54 Å) equipped with a position sensitive detector LynxEye XE-T, an X-ray diffraction analysis was performed using an FDS of 0.5° and a 2θ range of 10° to 125°, under the conditions of a step size of 0.02°, and a total scan time of about 60 min. For the measured data, the Rietveld refinement was performed in consideration of charges (metal ions at the transition metal site are +3, and Ni ions at the Li site are +2) at each site and cation mixing. The Rietveld refinement is an analysis technique. The crystal grain size was analyzed in consideration of instrumental broadening by using the fundamental parameter approach (FPA) implemented in the Bruker TOPAS program, and all peaks in the measurement range were used for fitting. The peak shape was fitted using only the Lorentzian contribution as the first principle (FP) among peak types available in TOPAS, and here, no strain was considered.

The positive electrode material according to the present disclosure, and the positive electrode and the lithium secondary battery including the same include at least one of the following disclosed configurations, and may include any combination of technically possible configurations among the following configurations.

### Positive Electrode Material

Hereinafter, the positive active material according to the present invention will be described.

The positive electrode material according to the present disclosure includes a positive electrode active material. The positive electrode active material includes: lithium nickel-based oxide particles in the form of secondary particles as agglomerates of primary particles, in which among all metals excluding lithium, the content of nickel (Ni) is 50 mol% to 90 mol%; and a boron (B)-containing coating layer formed on the surface of the lithium nickel-based oxide particles. The BET specific surface area of the positive electrode material is 0.41 m²/g to 0.59 m²/g, and the average crystallite size of the positive electrode material is 155 nm or more.

Lithium nickel-based oxide particles, which have conventionally been used as the positive electrode active material, generally have a specific surface area of 0.6 m²/g to 1.9 m²/g. Such a conventional positive electrode active material has excellent resistance characteristics due to its high internal porosity, but the particles are easily broken during manufacturing of an electrode, and then a large amount of fine powder is generated. Then, there is a problem in that side reactions with an electrolyte frequently occur, and thus an excessive amount of gas is generated during high-temperature storage. On the contrary, when the specific surface area of the positive electrode active material is reduced, particle breakage may be reduced, and the amount of gas generated during high-temperature storage may be reduced. However, in the application to the lithium secondary battery, the initial resistance of the battery increases, causing a problem such as a decrease in the output characteristics and capacity characteristics of the secondary battery.

As a result of extensive and continuous research to solve such problems, the present inventors have found that the BET specific surface area of the positive electrode material is controlled at a level of 0.41 m²/g to 0.59 m²/g, and the average crystallite size of the positive electrode material is adjusted to 155 nm or more. Then, the initial resistance is reduced, thereby achieving excellent output characteristics, and the amount of gas generated during high-temperature storage is reduced, thereby achieving excellent high-temperature storage characteristics.

According to one embodiment of the present invention, the BET specific surface area of the positive electrode material is 0.41 m²/g to 0.59 m²/g. Preferably, may be 0.41 m²/g or more or 0.42 m²/g or more, may be 0.59 m²/g or less, 0.58 m²/g or less, 0.57 m²/g or less, 0.56 m²/g or less or 0.55 m²/g or less, more preferably 0.41 m²/g to 0.55 m²/g. When the BET specific surface area of the positive electrode material is less than 0.41 m²/g, the material may become under-sintered during production or undergo structural instability due to increased calcination temperature. This leads to an increase in residual lithium on the surface, resulting in greater gas generation during high-temperature storage. On the other hand, when the specific surface area exceeds 0.59 m²/g, particle breakage increases during rolling, which enlarges the contact area with the electrolyte and enhances the moisture absorption of the electrolyte at the interface, thereby also causing increased gas generation during high-temperature storage. Therefore, When the BET specific surface area of the positive electrode material satisfies the above range, the initial resistance is reduced, thereby achieving excellent output characteristics. Also, the amount of gas generated during high-temperature storage may be reduced, thereby achieving excellent high-temperature storage characteristics.

According to one embodiment of the present disclosure, the average crystallite size of the positive electrode material is 155 nm or more, preferably, 155 nm or more, 190 nm or less, 185 nm or less, 180 nm or less, 175 nm or less or 170 nm or less, more preferably 155 nm to 170 nm. When the average crystallite size of the positive electrode material is less than 155 nm, numerous primary particles within the secondary particle are randomly arranged. As a result, lithium-ion migration paths within the secondary particle become diversified, leading to unnecessary lithium-ion movement. In other words, the movement of lithium ions through the interfaces between primary particles within the secondary particle is hindered, causing an increase in initial resistance. Additionally, the specific surface area increases, which results in increased gas generation. Therefore, When the above range is satisfied, it is possible to achieve excellent initial resistance characteristics and high-temperature storage characteristics.

Also, according to the research of the present inventors, it was found that when both the BET specific surface area range and the average crystallite size range of the positive electrode material are satisfied, both excellent output characteristics and excellent high-temperature storage characteristics are achieved. It was found that the effect of improving output characteristics and reducing the amount of gas generated during high-temperature storage was insignificant when the average crystallite size is less than 155 nm even if the BET specific surface area of the positive electrode material satisfies 0.41 m²/g to 0.59 m²/g, or when the BET specific surface area is out of the above range even if the average crystallite size of the positive electrode material is 155 nm or more.

For example, when the BET specific surface area and the average crystallite size of the positive electrode material are not simultaneously controlled within predetermined ranges, the contact area with an electrolyte, the stability of the crystal structure, and the efficiency of a lithium path depending on a crystal grain size, are not preferably intimately combined. This causes a problem in that the output characteristics deteriorate and the amount of gas generated during high-temperature storage increases.

Meanwhile, the BET specific surface area and the average crystallite size of the positive electrode material are controlled by the complex action of the BET specific surface area and the average crystallite size of the positive electrode active material included in the positive electrode material, the BET specific surface area and the average particle size of a precursor used for manufacturing the positive electrode active material, the molar ratios of lithium and transition metals during firing of the precursor, and the firing temperature and the coating element content when the positive electrode active material and the positive electrode material are manufactured. At this time, when the positive electrode material has a bimodal particle size distribution having a positive electrode active material with a large average particle size and a positive electrode active material with a small average particle size, the BET specific surface area and the average crystallite size of the positive electrode material may be controlled by the complex action of the BET specific surface area and the average crystallite size of each positive electrode active material and the coating element content, and the like, but the present disclosure is not limited thereto.

At this time, the BET specific surface area and the average crystallite size of the positive electrode material are values measured from positive electrode material powder, and are distinguished from the BET specific surface area and the average crystallite size of individual positive electrode active material particles. For example, when a positive electrode active material with a large average particle size and a positive electrode active material with a small average particle size are included, the BET specific surface area and the average crystallite size of each may be different from the BET specific surface area and the average crystallite size of the entire positive electrode material.

Hereinafter, the positive electrode material according to the present invention will be described in detail with preferred embodiments.

According to one embodiment of the present disclosure, the positive electrode material includes a positive electrode active material that includes: lithium nickel-based oxide particles in the form of secondary particles as agglomerates of primary particles; and a boron (B)-containing coating layer formed on the surface of the lithium nickel-based oxide particles.

According to one embodiment of the present disclosure, in the lithium nickel-based oxide particles, the content of Ni among metal elements other than lithium is 50 mol% to 90 mol%, preferably, 60 mol% to 90 mol%, more preferably 60 mol% to 85 mol%, more preferably 65 mol% to 80 mol%.

For example, the lithium nickel-based oxide particles may be represented by the following formula 1.

[Formula 1] Liₐ[Ni_{b}Co_{c}M¹_{d}M²ₑ]O₂

In the above formula 1, the symbol M¹ may be Mn, Al, or a combination thereof.

The symbol M² may be at least one selected from the group consisting of Ti, Mg, Al, Zr, Y, Ba, Ca, Sr, W, Ta, Nb, and Mo, preferably, may be at least one selected from the group consisting of, Ti, Zr, Y and Mg. When the above conditions are satisfied, particle growth during firing may be promoted, or crystal structural stability may be improved.

The symbol "a" represents the molar ratio of lithium in the lithium nickel-based oxide particles, and may satisfy the numerical ranges of 0.80≤a≤1.20, 0.90≤a≤1.10 or 1.00≤a≤1.10. When the above ranges are satisfied, the resistance may be reduced while the gas generation amount may be reduced.

The symbol "b" represents the molar ratio of nickel among metals other than lithium in the lithium nickel-based oxide particles, and may satisfy the numerical ranges of 0.50≤b≤0.90, 0.60≤b≤0.90, 0.60≤b≤0.85 or 0.65≤b≤0.80.

The symbol "c" represents the molar ratio of cobalt among metals other than lithium in the lithium nickel-based oxide particles, and may satisfy the numerical ranges of 0<c≤0.40, 0<c≤0.25 or 0<c≤0.15.

The symbol "d" represents the molar ratio of the M¹ element among metals other than lithium in the lithium nickel-based oxide particles, and may satisfy the numerical ranges of 0<d≤0.40, 0<d≤0.30 or 0<d≤0.25.

The symbol "e" represents the molar ratio of the M² element among metals other than lithium in the lithium nickel-based oxide particles, and may satisfy the numerical ranges of 0≤e≤0.10, 0≤e≤0.08 or 0≤e≤0.05.

According to one embodiment of the present disclosure, the lithium nickel-based oxide particles are in the form of secondary particles as agglomerates of primary particles. When the lithium nickel-based oxide particles are in the form of secondary particles, a high rolling density may be achieved so that the energy density per volume may be increased. Also, in a case where the boron (B)-containing coating layer is formed on the surface of the lithium nickel-based oxide particles while the above-mentioned BET specific surface area range and average crystallite size range of the positive electrode material are satisfied, suitable conditions for achieving more excellent output characteristics and high-temperature storage characteristics may be satisfied.

For example, when the lithium nickel-based oxide particles are in the form of primary particles rather than secondary particles, a large amount of inactive rock-salt structure tends to form on the particle surface, hindering ion transport. Additionally, the average crystal grain size becomes excessively large, leading to poor lithium-ion mobility and inferior resistance characteristics. Furthermore, in the case of primary particle-type lithium nickel-based oxides, the washing process cannot be performed due to the formation of inactive surface structures during washing, resulting in increased resistance. Consequently, it becomes difficult to control the residual lithium content on the surface. Therefore, the advantageous effects of the present invention are more effectively realized when the lithium nickel-based oxide particles are in the form of secondary particles.

According to one embodiment of the present disclosure, the coating layer is formed on the surface of the lithium nickel-based oxide particles, and contains boron (B). When the boron (B)-containing coating layer is formed on the surface of the lithium nickel-based oxide particles, the contact between an electrolyte and lithium nickel-based oxide particles may be minimized due to the coating layer, and the occurrence of side reactions between the electrolyte and the lithium nickel-based oxide and the elution of transition metals may be suppressed. Thus, an effect of improving life characteristics may be obtained.

According to one embodiment of the present disclosure, the boron (B) may be included in an amount of 500 ppm to 1000 ppm, preferably, 600 ppm to 900 ppm, more preferably 700 ppm to 900 ppm with respect to the total weight of the positive electrode material. When the above range is satisfied, while the elution of transition metals may be suppressed, the particle breakage during rolling may be reduced, and the resistance may not be excessively increased.

According to one embodiment of the present disclosure, the amount of residual lithium in the positive electrode material may be 0.2 wt% to 0.4 wt%, preferably, 0.25 wt% to 0.35 wt%, more preferably 0.25 wt% to 0.30 wt%. When the above range is satisfied, it is possible to prevent or suppress a problem in which the surface of the positive electrode active material is collapsed due to excessive washing while preventing or suppressing a resistance from increasing due to residual lithium.

According to one embodiment of the present disclosure, the cation mixing ratio of the positive electrode active material may be 2.5 at% or less, preferably, 1.0 at% to 2.5 at%, more preferably 1.0 at% to 2.0 at%. When the above range is satisfied, a high degree of crystal structure completion is obtained, thereby improving resistance characteristics. Here, at% means atomic%.

According to one embodiment of the present disclosure, the positive electrode material may include large particles having an average particle size D₅₀ of 6 µm to 20 µm, and small particles having an average particle size D₅₀ of 0.1 µm to 5.5 µm.

When the small particles with an average particle size D₅₀ smaller than that of the large particles are included, in the manufacturing of the positive electrode, pores between the large particles having a large average particle size are filled with the small particles having a small average particle size, thereby increasing the electrode density and increasing the contact area between particles. Thus, an effect of improving the energy density may be obtained.

According to one embodiment of the present disclosure, the average particle size D₅₀ of the large particles may be 6 µm to 20 µm, preferably, 6 µm to 15 µm more preferably 7 µm to 11 µm.

According to one embodiment of the present disclosure, the average particle size D₅₀ of the small particles may be 0.1 µm to 5.5 µm, preferably 1 µm to 5 µm, preferably 2 µm to 5 µm. When the above range is satisfied, the energy density may be excellent.

According to one embodiment of the present disclosure, the large particles include lithium nickel-based oxide particles in the form of secondary particles as agglomerates of primary particles, and the lithium nickel-based oxide particles may be represented by the following formula 2.

[Formula 2] Liₐ₁Ni_{b1}Co_{c1}M³_{d1}M⁴ₑ₁O₂

In the above formula 2, the symbol M³ may be Mn, Al or a combination thereof.

The symbol M⁴ may be at least one selected from the group consisting of Ti, Mg, Al, Zr, Y, Ba, Ca, Sr, W, Ta, Nb, and Mo.

The symbol "a1" represents the molar ratio of lithium in the lithium nickel-based oxide particles, and may satisfy the numerical ranges of 0.80≤a1≤1.20, 0.90≤a1≤1.10 or 1.00≤a1≤1.10.

The symbol "b1" represents the molar ratio of nickel among metals other than lithium in the lithium nickel-based oxide particles, and may satisfy the numerical ranges of 0.30≤b1<1.00, 0.40≤b1≤0.90, 0.50≤b1≤0.85 or 0.65≤b≤0.80.

The symbol "c1" represents the molar ratio of cobalt among metals other than lithium in the lithium nickel-based oxide particles, and may satisfy the numerical ranges of 0<c1≤0.70, 0<c1≤0.40 or 0<c1≤0.20.

The symbol "d1" represents the molar ratio of the M¹ element among metals other than lithium in the lithium nickel-based oxide particles, and may satisfy the numerical ranges of 0<d1≤0.70, 0<d1≤0.40 or 0<d1≤0.30.

The symbol "e1" represents the molar ratio of the M² element among metals other than lithium in the lithium nickel-based oxide particles, and may satisfy the numerical ranges of 0≤e1≤0.10, 0≤e1≤0.08 or 0≤e1≤0.05.

According to one embodiment of the present disclosure, the large particles may include the lithium nickel-based oxide particles and the boron (B)-containing coating layer formed on the surface of the lithium nickel-based oxide particles. When the coating layer is formed on the surface of the lithium nickel-based oxide particles, the contact between the electrolyte and lithium nickel-based oxide particles may be suppressed due to the coating layer. Accordingly, it is possible to obtain an effect of reducing transition metal elution or gas generation caused by side reactions with the electrolyte.

According to one embodiment of the present disclosure, the coating layer may further include at least one selected from the group consisting of Al, Ti, W, F, P, Mg, Ni, Co, Fe, Cr, V, Cu, Ca, Zn, Zr, Nb, Mo, Sr, Sb, Bi, Si and S. When the above conditions are satisfied, the occurrence of side reactions of the electrolyte may be suppressed.

According to one embodiment of the present disclosure, the small particles include lithium nickel-based oxide particles in the form of secondary particles as agglomerates of primary particles, and the lithium nickel-based oxide particles may be represented by the following formula 3.

[Formula 3] Liₐ₂Ni_{b2}Co_{c2}M⁵_{d2}M⁶ₑ₂O₂

In the above formula 3, M⁵ may be Mn, Al or a combination thereof.

The symbol M⁶ may be at least one selected from the group consisting of Ti, Mg, Al, Zr, Y, Ba, Ca, Sr, W, Ta, Nb, and Mo.

The symbol "a2" represents the molar ratio of lithium in the lithium nickel-based oxide particles, and may satisfy the numerical ranges of 0.80≤a1≤1.20, 0.90≤a1≤1.10 or 1.00≤a1≤1.10.

The symbol "b2" represents the molar ratio of nickel among metals other than lithium in the lithium nickel-based oxide particles, and may satisfy the numerical ranges of 0.30≤b1<1.00, 0.40≤b1≤0.90, 0.50≤b1≤0.85 or 0.65≤b≤0.80.

The symbol "c2" represents the molar ratio of cobalt among metals other than lithium in the lithium nickel-based oxide particles, and may satisfy the numerical ranges of 0<c1≤0.70, 0<c1≤0.40 or 0<c1≤0.20.

The symbol "d2" represents the molar ratio of the M¹ element among metals other than lithium in the lithium nickel-based oxide particles, and may satisfy the numerical ranges of 0<d1≤0.70, 0<d1≤0.40 or 0<d1≤0.30.

The symbol "e2" represents the molar ratio of the M² element among metals other than lithium in the lithium nickel-based oxide particles, and may satisfy the numerical ranges of 0≤e1≤0.10, 0≤e1≤0.08 or 0≤e1≤0.05.

According to one embodiment of the present disclosure, the small particles may include the lithium nickel-based oxide particles and the boron (B)-containing coating layer formed on the surface of the lithium nickel-based oxide particles. When the coating layer is formed on the surface of the lithium nickel-based oxide particles, the contact between the electrolyte and lithium nickel-based oxide particles may be suppressed due to the coating layer. Accordingly, it is possible to obtain an effect of reducing transition metal elution or gas generation caused by side reactions with the electrolyte.

According to one embodiment of the present disclosure, the large particles and the small particles may be included in a weight ratio of 60: 40 to 80: 20, preferably, may be included in a weight ratio of 65: 35 to 75: 25. When the above range is satisfied, the particle breakage suppression effect during rolling and the energy density may be excellent.

### Positive Electrode

Hereinafter, positive electrode according to the present invention will be described.

The positive electrode according to the present disclosure includes the above-described positive electrode material according to the present disclosure. The positive electrode includes: a positive electrode current collector; and a positive electrode active material layer formed on the positive electrode current collector, and including the above-described positive electrode material of the present disclosure.

In the positive electrode, the positive electrode current collector is not particularly limited as long as it has conductivity without causing chemical changes in the battery. For example, stainless steel, aluminum, nickel, titanium, baked carbon, or aluminum or stainless steel whose surface is treated with carbon, nickel, titanium, silver, and the like, may be used. Also, the positive electrode current collector may usually have a thickness of 3 µm to 500 µm, and it is also possible to increase the adhesion of the positive electrode active material by forming fine irregularities on the surface of the positive electrode current collector. For example, the use in various forms such as a film, a sheet, a foil, a net, a porous body, a foam, and a nonwoven fabric is possible.

Also, the positive electrode active material layer may further include a conductive material and a binder together with the above-described positive electrode material.

The conductive material is used to impart conductivity to the electrode, and may be used without particular limitation, as long as it has electronic conductivity without causing a chemical change in the battery to be formed. Examples thereof may include: graphite such as natural graphite or artificial graphite; carbon-based materials such as carbon black, acetylene black, Ketjen black, channel black, furnace black, lamp black, thermal black, carbon fiber, and carbon nanotubes; metal powder or metal fiber such as copper, nickel, aluminum, and silver; conductive whiskers such as zinc oxide and potassium titanate; conductive metal oxides such as titanium oxide; and conductive polymers such as polyphenylene derivatives, and among these, one type may be used alone or a mixture of two or more types may be used. The conductive material may be generally included in an amount of 1 to 30 wt%, preferably, 1 wt% to 20 wt%, more preferably 1 wt% to 10 wt% with respect to the total weight of the positive electrode active material layer.

The binder performs a role of improving the adhesion between positive electrode active material particles and the adhesive strength between the positive electrode active material and the positive electrode current collector. Examples thereof may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene butadiene rubber (SBR), fluororubber, and various copolymers thereof, and among these, one type may be used alone or a mixture of two or more types may be used. The binder may be included in an amount of 1 wt% to 30 wt%, preferably, 1 wt% to 20 wt%, more preferably 1 wt% to 10 wt% with respect to the total weight of the positive electrode active material layer.

The positive electrode may be manufactured according to a conventional positive electrode manufacturing method. For example, the positive electrode may be manufactured by preparing a positive electrode slurry, applying the positive electrode slurry on the positive electrode current collector, and performing drying and rolling. The positive electrode slurry is prepared by mixing the positive electrode active material, the binder, and/or the conductive material in a solvent. Here, the types and contents of the positive electrode active material, the binder, and the conductive material are the same as described above.

The solvent may be a solvent generally used in the relevant technical field. Examples thereof may include dimethyl sulfoxide (DMSO), isopropyl alcohol, N-methylpyrrolidone (NMP), acetone, and water, and among these, one type may be used alone or a mixture of two or more types may be used. It is sufficient when in consideration of the application thickness of the slurry and the manufacturing yield, the amount of the solvent to be used is set such that a viscosity for exhibiting excellent thickness uniformity is obtained when the positive electrode active material, the conductive material and the binder are dissolved or dispersed, and then are applied for manufacturing the positive electrode.

In another manufacturing method of the positive electrode, the positive electrode slurry may be cast on a separate support, and then a film obtained through exfoliation from the support may be laminated on the positive electrode current collector.

### Lithium Secondary Battery

Hereinafter, the lithium secondary battery according to the present invention will be described.

The lithium secondary battery of the present disclosure includes the positive electrode according to the present disclosure. preferably, may include a negative electrode, a separator, and an electrolyte. Also, the lithium secondary battery may further optionally include a battery container that accommodates an electrode assembly of the positive electrode, the negative electrode, and the separator, and a sealing member that seals the battery container.

### (Negative Electrode)

The negative electrode includes a negative electrode current collector and a negative electrode active material layer located on the negative electrode current collector.

The negative electrode current collector is not particularly limited as long as it has high conductivity without causing chemical changes in the battery. For example, copper, stainless steel, aluminum, nickel, titanium, baked carbon, copper or stainless steel whose surface is treated with carbon, nickel, titanium, silver, etc., and aluminum-cadmium alloy may be used. Also, the negative electrode current collector may usually have a thickness of 3 µm to 500 µm, and as in the positive electrode current collector, fine irregularities may be formed on the current collector surface to enhance the bonding strength of the negative electrode active material. For example, the use in various forms, such as a film, a sheet, a foil, a net, a porous body, a foam, and a nonwoven fabric is possible.

The negative electrode active material layer may further optionally include a binder and a conductive material together with the negative electrode active material.

As for the negative electrode active material, a compound through which lithium can be reversibly intercalated and deintercalated may be used. Examples thereof may include a carbonaceous material such as artificial graphite, natural graphite, graphitized carbon fiber, and amorphous carbon; a metallic compound that can be alloyed with lithium, such as Si, Al, Sn, Pb, Zn, Bi, In, Mg, Ga, Cd, Si alloy, Sn alloy or Al alloy; a metal oxide by which lithium can be doped or undoped, such as SiO_{β} (0 <β< 2), SnO₂, vanadium oxide, and lithium vanadium oxide; or a composite containing the above metallic compound and the carbonaceous material, such as an Si-C composite or an Sn-C composite, and then any one of these or a mixture of two or more may be used.

Also, as for the negative electrode active material, a metal lithium thin film may also be used. In addition, both low-crystalline carbon and high-crystalline carbon may be used as the carbon material. Representative low-crystalline carbon may include soft carbon and hard carbon, and representative high-crystalline carbon may include: amorphous, plate-shaped, scaly, spherical or fibrous natural graphite or artificial graphite, Kish graphite, pyrolytic carbon, mesophase pitch-based carbon fiber, meso-carbon microbeads, mesophase pitches, and high-temperature baked carbon such as petroleum or coal tar pitch derived cokes.

The conductive material is used to provide conductivity to the electrode, and can be used without particular limitation in a configured battery as long as it has electronic conductivity without causing chemical changes. Examples may include graphite such as natural graphite or artificial graphite; carbon-based materials such as carbon black, acetylene black, Ketjen black, channel black, furnace black, lamp black, thermal black, carbon fiber, and carbon nanotubes; metal powder or metal fiber such as copper, nickel, aluminum, and silver; conductive whiskers such as zinc oxide and potassium titanate; conductive metal oxides such as titanium oxide; or conductive polymers such as polyphenylene derivatives, and among these, one type may be used alone or a mixture of two or more types may be used. The conductive material may be generally included in an amount of 1 wt% to 30 wt%, preferably, 1 wt% to 20 wt%, more preferably 1 wt% to 10 wt% with respect to the total weight of the negative electrode active material layer.

The binder performs a role of improving the adhesion between negative electrode active material particles and the adhesive strength between the negative electrode active material and the negative electrode current collector. Examples thereof may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluororubber, and various copolymers thereof, and among these, one type may be used alone or a mixture of two or more types may be used. The binder may be included in an amount of 1 wt% to 30 wt%, 1 wt% to 20 wt%, or 1 wt% to 10 wt% with respect to the total weight of the negative electrode active material layer.

As an example, the negative electrode active material layer may be manufactured by applying an negative electrode slurry on the negative electrode current collector and drying the slurry, or may be manufactured by casting the negative electrode slurry on a separate support, and then laminating the film obtained through exfoliation from the support, on the negative electrode current collector. The negative electrode slurry includes the negative electrode active material, and optionally the binder and the conductive material.

### (Separator)

Meanwhile, in the lithium secondary battery, the separator separates the negative electrode and the positive electrode from each other and provides a movement passage of lithium ions, and can be used without particular limitation as long as it is usually used as a separator in the lithium secondary battery. In particular, it is desirable that it exhibits low resistance to the ion transport of the electrolyte while also having excellent electrolyte impregnation capability. Preferably, a porous polymer film, for example, a porous polymer film made of a polyolefin-based polymer such as an ethylene homopolymer, a propylene homopolymer, an ethylene/butene copolymer, an ethylene/hexene copolymer and an ethylene/methacrylate copolymer, or a laminated structure of two or more layers of these may be used. Also, a conventional porous non-woven fabric, for example, a non-woven fabric made of high melting point-glass fiber, polyethylene terephthalate fiber, and the like, may also be used. Also, a coated separator containing ceramic components or polymer materials may also be used so as to ensure heat resistance or mechanical strength, and may be optionally used as a single-layer or multi-layer structure.

### (Electrolyte)

Examples of the electrolyte used in the present disclosure may include an organic liquid electrolyte, an inorganic liquid electrolyte, a solid polymer electrolyte, a gel-type polymer electrolyte, a solid inorganic electrolyte, and a melted inorganic electrolyte, which can be used in manufacturing of the lithium secondary batteries, but are not limited to these.

The electrolyte may include an organic solvent and a lithium salt.

The organic solvent may be used without any particular limitation as long as it can serve as a medium through which ions involved in the electrochemical reaction of the battery are movable. preferably, as for the organic solvent, it is possible to use ester-based solvents such as methyl acetate, ethyl acetate, γ-butyrolactone, and ε-caprolactone; ether-based solvents such as dibutyl ether or tetrahydrofuran; ketone-based solvents such as cyclohexanone; aromatic hydrocarbon-based solvents such as benzene and fluorobenzene; carbonate-based solvents such as dimethylcarbonate (DMC), diethylcarbonate (DEC), methylethylcarbonate (MEC), ethylmethylcarbonate (EMC), ethylene carbonate (EC), and propylene carbonate (PC); alcohol-based solvents such as ethyl alcohol, and isopropyl alcohol; nitriles such as R-CN (R is a C2 to C20 linear, branched or cyclic hydrocarbon group, and may include a double bond aromatic ring or an ether bond) ; amides such as dimethylformamide; dioxolanes such as 1,3-dioxolane; or sulfolanes. Among these, the carbonate-based solvent may be preferred, and a mixture of a cyclic carbonate having high ion conductivity and high dielectric constant and capable of improving charge/discharge performance of a battery (*e.g.,* ethylenecarbonate or propylenecarbonate), and a linear carbonate-based compound having low viscosity (*e.g.,* ethylmethylcarbonate, dimethylcarbonate or diethylcarbonate) may be more preferred.

The lithium salt may be used without any particular limitation, as long as it is a compound capable of providing lithium ions to be used in the lithium secondary battery. preferably, as for the lithium salt, LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used. It is desirable that the lithium salt is used at a concentration falling within a range of 0.1 M to 5.0 M, preferably 0.1 M to 3,0 M. When the concentration of the lithium salt falls within the above range, since the electrolyte has appropriate conductivity and viscosity, excellent electrolyte performance may be exhibited, and lithium ions may be effectively moved.

In addition to the above electrolyte components, for the purpose of improving battery life characteristics, suppressing battery capacity reduction, and improving battery discharge capacity, the electrolyte may further include an additive. For example, as the additive, a haloalkylene carbonate-based compound such as difluoro ethylenecarbonate, pyridine, triethylphosphite, triethanolamine, cyclic ether, ethylene diamine, n-glyme, hexamethylphosphoric acid triamide, nitrobenzene derivatives, sulfur, quinone imine dye, N-substituted oxazolidinone, N,N-substituted imidazolidine, ethylene glycol dialkyl ether, ammonium salt, pyrrole, 2-methoxy ethanol or aluminum trichloride may be used alone or in combination, but the present disclosure is not limited thereto. The additive may be included in an amount of 0.1 to 10 wt%, preferably 0.1 to 5 wt% with respect to the total weight of the electrolyte.

As described above, the lithium secondary battery according to the present disclosure exhibits excellent output characteristics, and is useful not only in the field of electric vehicles such as hybrid electric vehicles (HEVs), but also in the field of portable devices such as mobile phones, notebook computers, and digital cameras.

Accordingly, according to another embodiment of the present disclosure, a battery module including the lithium secondary battery as a unit cell and a battery pack including the same are provided.

The battery module or the battery pack may be used as power sources for one or more medium-to-large devices among power tools; electric cars including an electric vehicle (EV), a hybrid electric vehicle, and a plug-in hybrid electric vehicle (PHEV); and power storage systems.

Hereinafter, Examples of the present disclosure will be described in detail so that those with ordinary skill in the technical field to which the present disclosure belongs can easily implement the present disclosure. However, the present disclosure may be implemented in various different forms and is not limited to Examples described herein.

### Example 1

Li_{1.0}[Ni_{0.7}Co_{0.1}Mn_{0.2}]O₂ having an average particle size D₅₀ of 9.9 µm as large particles and Li_{1.0}[Ni_{0.7}Co_{0.1}Mn_{0.2}]O₂ having an average particle size (D₅₀) of 4 µm as small particles were mixed at a weight ratio of 70 : 30 to prepare a mixed positive electrode active material. Here, the large particle and the small particle were each in the secondary particle form, and the large particles were manufactured by mixing a composite transition metal precursor (Ni_{0.7}Co_{0.1}Mn_{0.2}(OH)₂) having a BET specific surface area of 5.7 m²/g with a lithium source (Li₂CO₃) such that the molar ratio of Li: Ni+Co+Mn became 1.03: 1, and then firing the mixture.

The mixed positive electrode active material and H₃BO₃ were mixed, and then fired at a temperature of 320°C for 6 h to prepare a positive electrode material in which a boron (B)-containing coating layer was formed on the surface of the positive electrode active material particles.

Boron (B) was included at 800 ppm with respect to the total weight of the positive electrode material.

Next, a positive electrode slurry was prepared by mixing the positive electrode material, carbon black as a conductive material, and polyvinylidene fluoride (PVDF) as a binder at a weight ratio of 96: 1: 3 in N-methyl-2-pyrrolidone (NMP). The positive electrode slurry was applied to one surface of an aluminum current collector, dried at 130°C, and then rolled to prepare a positive electrode.

A negative electrode slurry was prepared by mixing artificial graphite as a negative electrode active material, carbon black as a conductive material, and carboxymethyl cellulose (CMC) as a binder at a weight ratio of 97: 1.5: 1.5. This was applied to one surface of a copper current collector, dried at 110°C, and then rolled to prepare a negative electrode.

An electrode assembly was manufactured by interposing a separator between the positive electrode and the negative electrode, and then was positioned inside a battery casing. Then, an electrolyte was injected into the casing to manufacture a lithium secondary battery. The electrolyte was an electrolyte obtained by dissolving 1 M of LiPF₆ in a mixed organic solvent obtained by mixing ethylene carbonate (EC): dimethyl carbonate (DMC): ethylmethyl carbonate (EMC) in a volume ratio of 30: 40: 30.

### Examples 2 to 3 and Comparative Examples 1 to 5

A lithium secondary battery was manufactured in the same manner as in Example 1 except that during the preparation of large particles, the ratio (Li/Me) of the number of moles (Li) of lithium contained in Li₂CO₃ to the total number of moles (Ni+Co+Mn, Me) of transition metals in the composite transition metal precursor, and the BET specific surface area of the composite transition metal precursor were adjusted as in Table 1 below.

Also, the average particle sizes of large particles used in Examples and Comparative Examples are as illustrated in Table 1 below.

**[Table 1]**

| | Li/Me during preparation of large particles | BET specific surface area of precursor (m²/g) | average particle size of large particles (D50, µm) |
|---|---|---|---|
| Example 1 | 1.03 | 5.7 | 9.9 |
| Example 2 | 1.06 | 5.7 | 9.9 |
| Example 3 | 1.03 | 5.6 | 9.7 |
| Comparative Example 1 | 1.03 | 4.6 | 9.7 |
| Comparative Example 2 | 1.05 | 6.0 | 9.9 |
| Comparative Example 3 | 1.05 | 4.6 | 9.7 |
| Comparative Example 4 | 1.06 | 6.0 | 9.9 |
| Comparative Example 5 | 1.06 | 5.7 | 9.9 |

Experimental Example 1: Measurement of BET specific surface area and average crystallite size of positive electrode material

The BET specific surface area was measured through a BET method, for positive electrode material powder prepared in the above examples 1 to 3 and comparative examples 1 to 5, and the average crystallite size was measured by performing an X-ray diffraction analysis (XRD, Bruker D8 Endeavor). Here, conditions for performing the BET method and the X-ray diffraction analysis are the same as those described above.

The measurement results are presented in Table 2 below.

**[Table 2]**

| | Positive electrode material | |
|---|---|---|
| | BET specific surface area (m²/g) | Average crystallite size (nm) |
| Example 1 | 0.42 | 163 |
| Example 2 | 0.42 | 160 |
| Example 3 | 0.46 | 165 |
| Comparative Example 1 | 0.37 | 150 |
| Comparative Example 2 | 0.66 | 152 |
| Comparative Example 3 | 0.38 | 162 |
| Comparative Example 4 | 0.61 | 161 |
| Comparative Example 5 | 0.43 | 143 |

### Experimental Example 2: Measurement of residual lithium amount and cation mixing ratio

After 5 g of positive electrode material powder, prepared in the above examples 1 to 3 and comparative examples 1 to 5, was dispersed in 100 ml of distilled water, the amount of residual lithium dissolved in the distilled water was measured by a method called a pH Titration. The measured residual lithium amount was expressed as wt% with respect to the total weight of the positive electrode material.

Also, the cation mixing ratio of the positive electrode material prepared in the above examples 1 to 3 and comparative examples 1 to 5 was measured through an XRD analysis. An XRD analysis was performed using an X-ray diffraction analyzer (Bruker AXS D4-Endeavor XRD), using a Cu Ka light source under an acceleration voltage condition of 10 kV.

The results of the above measurement are presented in Table 3 below.

**[Table 3]**

| | Positive electrode material | |
|---|---|---|
| | Residual lithium amount (wt%) | Cation mixing ratio (at%) |
| Example 1 | 0.29 | 1.5 |
| Example 2 | 0.27 | 1.4 |
| Example 3 | 0.26 | 1.5 |
| Comparative Example 1 | 0.27 | 1.4 |
| Comparative Example 2 | 0.33 | 1.4 |
| Comparative Example 3 | 0.34 | 1.4 |
| Comparative Example 4 | 0.40 | 1.4 |
| Comparative Example 5 | 0.44 | 2.2 |

### Experimental Example 3: Initial resistance measurement

Three cycles of charging/discharging were performed on each of the lithium secondary batteries manufactured in Examples 1 to 3 and Comparative Examples 1 to 5. Charging to 4.25 V at 25°C with a constant current of 0.3 C, and discharging to 3.0 V with a constant current of 39 mAh/g were determined as one cycle.

Then, each battery was charged to 4.25 V at 0.3C CC under a constant current-constant voltage (CC-CV) charging condition at 25°C, and then was pulse-discharged at a 2.5 C rate condition at the SOC of 50% and 10%. Then, an initial resistance value was obtained by measuring a voltage drop for 10 sec.

The initial resistance values are presented in Table 4 below.

### Experimental Example 4. Evaluation of gas generation amount

Each of the lithium secondary batteries manufactured in Examples 1 to 3 and Comparative Examples 1 to 5 was charged to 4.25 V with a constant current of 0.3 C, and then charged with a constant voltage of 4.25 V until the charge current reached 0.05 C (cut-off current). Then, each lithium secondary battery was stored for 4 weeks at 60°C, and then, the gas generation amount was measured.

The gas generation amounts are presented in Table 4 below.

**[Table 4]**

| | Initial resistance value (Ω) | | Gas generation amount (*µ*ℓ) |
|---|---|---|---|
| | SOC 50% | SOC 10% | |
| Example 1 | 1. 43 | 2.34 | 216 |
| Example 2 | 1.45 | 2.37 | 230 |
| Example 3 | 1. 42 | 2.42 | 226 |
| Comparative Example 1 | 1. 42 | 2.52 | 236 |
| Comparative Example 2 | 1.39 | 2.23 | 352 |
| Comparative Example 3 | 1. 43 | 2.43 | 259 |
| Comparative Example 4 | 1.38 | 2.20 | 333 |
| Comparative Example 5 | 1.51 | 2.43 | 367 |

From the table 4, it can be found that in the case of Examples 1 to 3 in which the BET specific surface area and the average crystallite size of the positive electrode material satisfy the ranges of the present disclosure, it can be seen that the amount of gas generated is lower and the initial resistance is at a similar or lower level compared to Comparative Examples 1 to 5.

## Claims

1. A positive electrode material comprising:
a positive electrode active material that includes:
lithium nickel-based oxide particles in a form of secondary particles as agglomerates of primary particles, in which among all metals excluding lithium, a content of Ni is 50 mol% to 90 mol%; and
a boron (B)-containing coating layer formed on a surface of the lithium nickel-based oxide particles,
wherein a BET specific surface area of the positive electrode material is 0.41 m²/g to 0.59 m²/g, and
an average crystallite size of the positive electrode material is 155 nm or more.

2. The positive electrode material according to claim 1, wherein the average crystallite size of the positive electrode material is 155 nm to 170 nm.

3. The positive electrode material according to claim 1, wherein the lithium nickel-based oxide particles are represented by the following formula 1:
[Formula 1] Liₐ[Ni_{b}Co_{c}M¹_{d}M²ₑ]O₂
In the formula 1, M¹ is Mn, Al or a combination thereof, M² is at least one selected from the group consisting of Ti, Mg, Al, Zr, Y, Ba, Ca, Sr, W, Ta, Nb, and Mo, and a satisfies numerical ranges of 0.80≤a≤1.20, 0.50≤b≤0.90, 0<c≤0.40, 0<d≤0.40, and 0≤e≤0.10.

4. The positive electrode material according to claim 1, wherein the boron (B) is included in an amount of 500 ppm to 1000 ppm with respect to the total weight of the positive electrode material.

5. The positive electrode material according to claim 1, wherein a residual lithium amount in the positive electrode material is 0.2 wt% to 0.4 wt%.

6. The positive electrode material according to claim 1, wherein a cation mixing ratio of the positive electrode material is 2.5 at% or less.

7. The positive electrode material according to claim 1, comprising large particles having an average particle size D₅₀ of 6 µm to 20 µm, and small particles having an average particle size D₅₀ of 0.1 µm to 5.5 µm.

8. The positive electrode material according to claim 7, wherein the large particles and the small particles are included at a weight ratio of 60 : 40 to 80 : 20.

9. A positive electrode comprising the positive electrode material according to claim 1.

10. A lithium secondary battery comprising the positive electrode according to claim 9.
